# DEMANDE DE BREVET EUROPEEN

(11) **EP 4 559 746 A1**
(43) Date de publication de la demande: **28.05.2025**
(21) Numéro de dépôt: 24214456.6
(22) Date de dépôt: 21.11.2024
(51) Int. Cl.: B60N 2/815, B60N 2/865, B60N 2/894

(54) **APPUI-TÊTE DE SIÈGE DE VÉHICULE AUTOMOBILE**

(30) Priorité: 24.11.2023 FR 2313043
(71) Demandeur: TESCA France, 92977 Paris La Défense Cedex (FR)
(72) Inventeur: GEORGES, Laurent, 92977 Paris La Défense Cedex (FR); LEFEVRE, Steve, 92977 Paris La Défense Cedex (FR)
(74) Mandataire: Sayettat, Julien Christian

(57) **Abrégé**

L'invention concerne un appui-tête (1) de siège de véhicule automobile, ledit appui-tête comprenant un premier et un deuxième dispositif de verrouillage d'un premier et d'un deuxième bloc, une traverse (10) montée en coulissement transversal sur ledit premier bloc pour pouvoir interagir, depuis une position de verrouillage jusqu'à une position de déverrouillage, avec ledit premier dispositif de verrouillage pour l'amener en configuration déverrouillée, une came (12) montée en rotation selon un axe longitudinal (13) sur ledit premier bloc, un premier suiveur de came (14) issu de ladite traverse coopérant avec ladite came pour l'actionner en rotation depuis une position angulaire de verrouillage jusqu'à une position angulaire de déverrouillage quand ladite traverse est actionnée en déverrouillage, un deuxième suiveur de came (15) issu d'un loquet (7) du deuxième dispositif de verrouillage, ledit suiveur coopérant avec ladite came de manière à amener ledit loquet en position de déverrouillage quand ladite traverse est actionnée en déverrouillage.

## Description

L'invention concerne un appui-tête de siège de véhicule automobile.

Il est connu de réaliser un appui-tête de siège de véhicule automobile, ledit appui-tête comprenant :
- une armature destinée à être montée en haut de dossier dudit siège,
- un premier bloc monté en coulissement vertical sur ladite armature, de manière à permettre son réglage en hauteur,
- un premier dispositif de verrouillage dudit premier bloc dans la position de réglage choisie,
- un deuxième bloc monté en coulissement longitudinal sur ledit premier bloc, de manière à permettre son réglage longitudinal, ledit deuxième bloc présentant une face avant d'appui de la tête d'un occupant dudit siège,
- un deuxième dispositif de verrouillage dudit deuxième bloc dans la position de réglage choisie, ledit dispositif comprenant un loquet monté en coulissement vertical sur ledit premier bloc entre une position de verrouillage et une position de déverrouillage, ledit loquet coopérant en position de verrouillage avec une crémaillère longitudinale prévue sur ledit deuxième bloc,
- un moyen ressort d'actionnement dudit loquet en position de verrouillage,
- une traverse transversale montée en coulissement transversal sur ledit premier bloc, ladite traverse étant agencée pour pouvoir interagir, depuis une position de verrouillage jusqu'à une position de déverrouillage, avec ledit premier dispositif de verrouillage pour l'amener en configuration déverrouillée,
- un moyen d'actionnement manuel de ladite traverse pour l'actionner en position de déverrouillage.

Avec un tel agencement, se pose le problème de réaliser de façon ergonomique le déverrouillage du deuxième dispositif de verrouillage, afin de permettre le réglage longitudinal du deuxième bloc.

L'invention a pour but de proposer un agencement permettant de réaliser de façon ergonomique ce déverrouillage.

A cet effet, l'invention propose un appui-tête de siège de véhicule automobile, ledit appui-tête comprenant :
- une armature destinée à être montée en haut de dossier dudit siège,
- un premier bloc monté en coulissement vertical sur ladite armature, de manière à permettre son réglage en hauteur,
- un premier dispositif de verrouillage dudit premier bloc dans la position de réglage choisie,
- un deuxième bloc monté en coulissement longitudinal sur ledit premier bloc, de manière à permettre son réglage longitudinal, ledit deuxième bloc présentant une face avant d'appui de la tête d'un occupant dudit siège,
- un deuxième dispositif de verrouillage dudit deuxième bloc dans la position de réglage choisie, ledit dispositif comprenant un loquet monté en coulissement vertical sur ledit premier bloc entre une position de verrouillage et une position de déverrouillage, ledit loquet coopérant en position de verrouillage avec une crémaillère longitudinale prévue sur ledit deuxième bloc,
- un moyen ressort d'actionnement dudit loquet en position de verrouillage,
- une traverse transversale montée en coulissement transversal sur ledit premier bloc, ladite traverse étant agencée pour pouvoir interagir, depuis une position de verrouillage jusqu'à une position de déverrouillage, avec ledit premier dispositif de verrouillage pour l'amener en configuration déverrouillée,
- un moyen d'actionnement manuel de ladite traverse pour l'actionner en position de déverrouillage,
ledit appui-tête comprenant en outre :
- une came montée en rotation selon un axe longitudinal sur ledit premier bloc,
- un premier suiveur de came issu de ladite traverse, ledit suiveur coopérant avec ladite came pour l'actionner en rotation depuis une position angulaire de verrouillage jusqu'à une position angulaire de déverrouillage quand ladite traverse est actionnée vers sa position de déverrouillage,
- un deuxième suiveur de came issu dudit loquet, ledit suiveur coopérant avec ladite came de manière à amener ledit loquet en position de déverrouillage quand ladite traverse est actionnée vers sa position de déverrouillage.

Dans cette description, les termes de positionnement dans l'espace (avant, haut, transversal, vertical, longitudinal, ...) sont pris en référence à l'appui-tête disposé en situation d'utilisation dans le véhicule, ledit véhicule s'étendant longitudinalement selon sa longueur (axe X), transversalement selon sa largeur (axe Y) et verticalement selon sa hauteur (axe Z).

Avec l'agencement proposé, le déverrouillage des deux blocs est réalisé de façon simultanée par une manoeuvre du moyen d'actionnement, ce qui présente une grande ergonomie.

D'autres particularités et avantages de l'invention apparaîtront dans la description qui suit, faite en référence aux figures jointes, dans lesquelles :

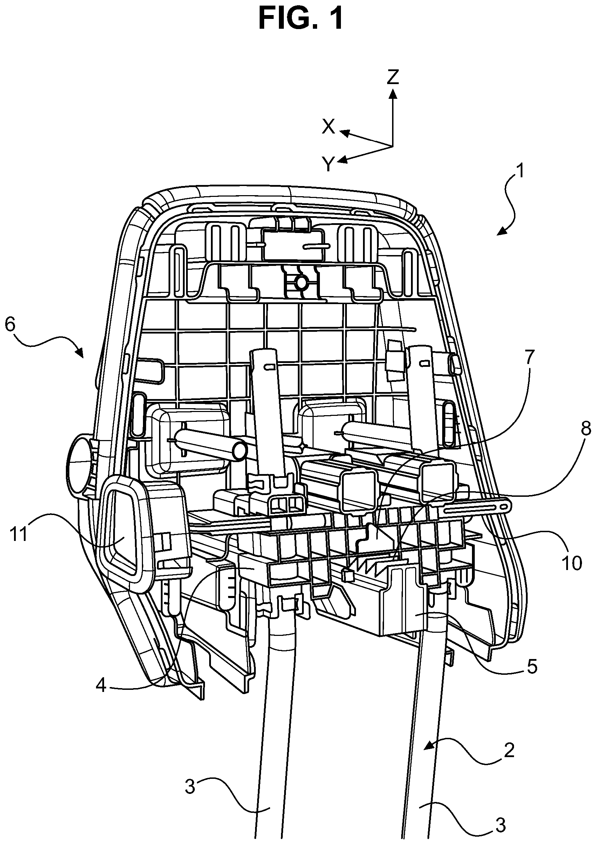

[Fig.1] est une vue schématique en perspective partielle d'un appui-tête selon une réalisation,

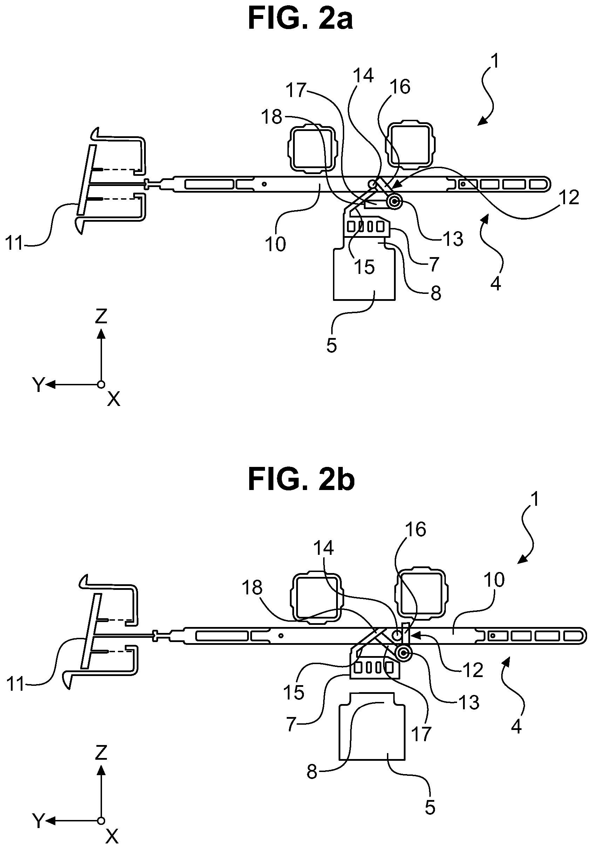

[Fig.2a] et
[Fig.2b] sont des vues schématiques partielles en coupe transversale verticale de l'appui-tête représenté en figure 1, la traverse étant en position de verrouillage (figure 2a) et de déverrouillage (figure 2b).

En référence aux figures, on décrit un appui-tête 1 de siège de véhicule automobile, ledit appui-tête comprenant :
- une armature 2 - présentant deux tiges 3 métalliques parallèles selon la réalisation représentée - destinée à être montée en haut de dossier dudit siège,
- un premier bloc 4 - notamment en matériau plastique moulé - monté en coulissement vertical sur ladite armature, de manière à permettre son réglage en hauteur,
- un premier dispositif de verrouillage dudit premier bloc dans la position de réglage choisie,
- un deuxième bloc 5 - notamment en matériau plastique moulé - monté en coulissement longitudinal sur ledit premier bloc, de manière à permettre son réglage longitudinal, ledit deuxième bloc présentant une face avant 6 d'appui de la tête d'un occupant dudit siège,
- un deuxième dispositif de verrouillage dudit deuxième bloc dans la position de réglage choisie, ledit dispositif comprenant un loquet 7 monté en coulissement vertical sur ledit premier bloc entre une position de verrouillage et une position de déverrouillage, ledit loquet coopérant en position de verrouillage avec une crémaillère 8 longitudinale prévue sur ledit deuxième bloc,
- un moyen ressort, non représenté, d'actionnement dudit loquet en position de verrouillage,
- une traverse 10 transversale - notamment en matériau plastique moulé - montée en coulissement transversal sur ledit premier bloc, ladite traverse étant agencée pour pouvoir interagir, depuis une position de verrouillage jusqu'à une position de déverrouillage, avec ledit premier dispositif de verrouillage pour l'amener en configuration déverrouillée,
- un moyen d'actionnement 11 manuel - sous forme de bouton poussoir selon la réalisation représentée - de ladite traverse pour l'actionner en position de déverrouillage,
ledit appui-tête comprenant en outre :
- une came 12 montée en rotation selon un axe longitudinal 13 sur ledit premier bloc,
- un premier suiveur de came 14 issu de ladite traverse, ledit suiveur coopérant avec ladite came pour l'actionner en rotation depuis une position angulaire de verrouillage jusqu'à une position angulaire de déverrouillage quand ladite traverse est actionnée vers sa position de déverrouillage,
- un deuxième suiveur de came 15 issu dudit loquet, ledit suiveur coopérant avec ladite came de manière à amener ledit loquet en position de déverrouillage quand ladite traverse est actionnée vers sa position de déverrouillage.

De façon non représentée, la face avant 6 peut être revêtue d'un coussin.

Selon la réalisation représentée, le premier suiveur de came 14 est sous forme d'un ergot saillant longitudinalement de la traverse 10.

Selon la réalisation représentée, la came 12 présente une forme générale de V de sorte que ladite came présente une première 16 et une deuxième 17 branche, le premier suiveur de came 14 prenant appui sur ladite première branche et le deuxième suiveur de came 15 prenant appui sur ladite deuxième branche, l'axe longitudinal 13 passant à l'intersection entre lesdites branches.

Selon la réalisation représentée, le deuxième suiveur de came 15 est sous forme de plan incliné par rapport à la verticale, ledit plan incliné prenant appui sur l'extrémité libre 18 de la deuxième branche 17.

Selon la réalisation représentée, l'inclinaison du plan incliné est définie de sorte que le retour du loquet 7 en position de verrouillage sous l'action du moyen ressort actionne la came 12 en rotation vers sa position angulaire de verrouillage pour la mettre en butée contre une butée de fin de course angulaire, non représentée, prévue sur le premier bloc 4, de manière à éviter des bruits parasites de vibration en situation de roulage du véhicule.

Selon une réalisation non représentée, le premier dispositif de verrouillage comprend :
- une pluralité de crans de verrouillage s'étageant axialement sur au moins une des tiges 3 (le terme « axialement » étant considéré en référence à l'axe d'extension de ladite tige) de manière à définir une tige crantée,
- au moins une saillie de verrouillage montée mobile par rapport au premier bloc 4 entre une position de verrouillage, où ladite saillie s'insère dans un desdits crans, et une position de déverrouillage, où ladite saillie se retire dudit cran afin de libérer le coulissement dudit bloc.

## Revendications

1. Appui-tête (1) de siège de véhicule automobile, ledit appui-tête comprenant :
• une armature (2) destinée à être montée en haut de dossier dudit siège,
• un premier bloc (4) monté en coulissement vertical sur ladite armature, de manière à permettre son réglage en hauteur,
• un premier dispositif de verrouillage dudit premier bloc dans la position de réglage choisie,
• un deuxième bloc (5) monté en coulissement longitudinal sur ledit premier bloc, de manière à permettre son réglage longitudinal, ledit deuxième bloc présentant une face avant (6) d'appui de la tête d'un occupant dudit siège,
• un deuxième dispositif de verrouillage dudit deuxième bloc dans la position de réglage choisie, ledit dispositif comprenant un loquet (7) monté en coulissement vertical sur ledit premier bloc entre une position de verrouillage et une position de déverrouillage, ledit loquet coopérant en position de verrouillage avec une crémaillère (8) longitudinale prévue sur ledit deuxième bloc,
• un moyen ressort d'actionnement dudit loquet en position de verrouillage,
• une traverse (10) transversale montée en coulissement transversal sur ledit premier bloc, ladite traverse étant agencée pour pouvoir interagir, depuis une position de verrouillage jusqu'à une position de déverrouillage, avec ledit premier dispositif de verrouillage pour l'amener en configuration déverrouillée,
• un moyen d'actionnement (11) manuel de ladite traverse pour l'actionner en position de déverrouillage,
ledit appui-tête étant **caractérisé en ce qu'**il comprend en outre :
• une came (12) montée en rotation selon un axe longitudinal (13) sur ledit premier bloc,
• un premier suiveur de came (14) issu de ladite traverse, ledit suiveur coopérant avec ladite came pour l'actionner en rotation depuis une position angulaire de verrouillage jusqu'à une position angulaire de déverrouillage quand ladite traverse est actionnée vers sa position de déverrouillage,
• un deuxième suiveur de came (15) issu dudit loquet, ledit suiveur coopérant avec ladite came de manière à amener ledit loquet en position de déverrouillage quand ladite traverse est actionnée vers sa position de déverrouillage.

2. Appui-tête (1) selon la revendication 1, **caractérisé en ce que** le premier suiveur de came (14) est sous forme d'un ergot saillant longitudinalement de la traverse (10).

3. Appui-tête (1) selon l'une des revendications 1 ou 2, **caractérisé en ce que** la came (12) présente une forme générale de V de sorte que ladite came présente une première (16) et une deuxième (17) branche, le premier suiveur de came (14) prenant appui sur ladite première branche et le deuxième suiveur de came (15) prenant appui sur ladite deuxième branche, l'axe longitudinal (13) passant à l'intersection entre lesdites branches.

4. Appui-tête (1) selon la revendication 3, **caractérisé en ce que** le deuxième suiveur de came (15) est sous forme de plan incliné par rapport à la verticale, ledit plan incliné prenant appui sur l'extrémité libre (18) de la deuxième branche (17).

5. Appui-tête (1) selon la revendication 4, **caractérisé en ce que** l'inclinaison du plan incliné est définie de sorte que le retour du loquet (7) en position de verrouillage sous l'action du moyen ressort actionne la came (12) en rotation vers sa position angulaire de verrouillage pour la mettre en butée contre une butée de fin de course angulaire prévue sur le premier bloc (4).
